# EUROPÄISCHE PATENTSCHRIFT

(11) **EP 1 409 934 B1**
(45) Veröffentlichungstag und Bekanntmachung des Hinweises auf die Patenterteilung: **05.03.2008**
(21) Anmeldenummer: 02751468.6
(22) Anmeldetag: 22.07.2002
(51) Int. Cl.: F24J 2/06, F24J 2/07, F24J 2/13, G02B 6/42

(54) **VERFAHREN ZUM GEWINNEN VON KALTEM LICHT AUS SONNENEINSTRAHLUNG, SOWIE SOLARKRAFTWERK**
METHOD FOR PRODUCING COLD LIGHT FROM INSOLATION, AND SOLAR POWER PLANT
PROCEDE POUR LA PRODUCTION DE LUMIERE FROIDE A PARTIR DE L'ENSOLEILLEMENT ET CENTRALE SOLAIRE

(30) Priorität: 23.07.2001 CH 13712001
(43) Veröffentlichungstag der Anmeldung: 21.04.2004
(73) Patentinhaber: Ziemba, Georg, 88175 Scheidegg (DE)
(72) Erfinder: Ziemba, Georg, 88175 Scheidegg (DE)
(74) Vertreter: Hasler, Erich
(86) Internationale Anmeldenummer: PCT/IB2002/002874
(87) Internationale Veröffentlichungsnummer: WO 2003/010470

(56) Entgegenhaltungen:
- EP-A- 0 046 546
- EP-A- 0 875 724
- WO-A-79/01021
- AU-B- 609 107
- DE-A- 2 622 023
- DE-A- 3 211 339
- DE-A- 3 431 571
- DE-A- 3 634 213
- DE-A- 19 735 281
- FR-A- 2 539 851
- US-A- 3 467 840
- US-A- 4 106 479
- US-A- 4 217 147
- US-A- 4 240 692
- US-A- 5 803 729
- PATENT ABSTRACTS OF JAPAN vol. 006, no. 112 (P-124), 23. Juni 1982 (1982-06-23) -& JP 57 041603 A (MORI TAKASHI), 8. März 1982 (1982-03-08)
- PATENT ABSTRACTS OF JAPAN vol. 2000, no. 11, 3. Januar 2001 (2001-01-03) -& JP 2000 216732 A (TAIYO YUDEN CO LTD), 4. August 2000 (2000-08-04)

## Beschreibung

Die Erfindung betrifft ein Verfahren zur Gewinnung von kaltem Licht aus Sonnenstrahlung sowie ein Solarkraftwerk.

### Stand der Technik

Seit mehreren Jahrzehnten bereits bekannt ist ein Sonnenkraftwerk mit einem Kugelspiegel (FR-A-635 283 aus dem Jahre 1927). Ein Kugelspiegel hat die Eigenschaft, dass er die aufgefangene Strahlung in einer Brennlinie sammelt. ist Die Brennlinie besitzt theoretisch die halbe Kugelradiuslänge. Gemäss FR-A-635 283 ist der Kugelspiegel auf der Erdoberfläche stationär ausgebildet. Die aufgefangene Strahlung wird lediglich als Wärmequelle genutzt. Nachteilig bei diesem Kraftwerk ist, dass der kürzerwellige Strahlungsanteil zur Energiegewinnung nicht genutzt wird.

Die DE-OS-3431571 offenbart eine Vorrichtung zur Bündelung elektromagnetischer Strahlung bestehend aus einem Trichter beliebigen Materials und Grösse mit einer Strahleneintrittsfläche und einer Strahlenaustrittsfläche. Die Innenwände des Trichters besitzen eine strahlenreflektierende Oberfläche. Der Öffnungswinkel des Trichters liegt im Bereich zwischen 5 und 20 Grad. Die Vorrichtung zur Bündelung elektromagnetischer Strahlung kann mit einem Strahlenaufnehmer in Gestalt einer Solar- oder Fotozellen zwecks Gewinnung von elektrischem Strom oder Wärmeenergie kombiniert sein. Werden eine Vielzahl von Trichtern und Strahlenaufnehmer miteinander in Kugelform angeordnet, so kann auf eine Nachführung der Anordnung verzichtet werden. Die DE-OS-3431571 lehrt jedoch nicht, die Trichter dazu zu verwenden, Wärmestrahlung auszufiltern. Sie lehrt auch nicht, das Licht vor seiner Verwertung an einen anderen Ort zu transportieren.

Die DE-OS-197 35 281 zeigt eine Einrichtung zur Erzeugung von Energie durch Sonnelichteinstrahlung. Die Einrichtung benutzt mindestens einen Glaskörper mit einer auf der Spitze stehenden Trichterform, dessen Spitze in ein Endes eines mindestens einadrigen Glasfaserkabels mündet und ist mit mindestens einem Solarzellenmodul verbunden. Glaskörper und Glasfasern können einstückig aus gezogenem Glas hergestellt sein. Gemäss Lehre der DE-OS-197 35 281 sind die Trichter für das direkte Auffangen von Sonneneinstrahlung ausgelegt. An ein vorgängiges Fokussieren der Sonnenstrahlung wurde nicht in Betracht gezogen. Die aus den Glasfasern austretende, fokussierte Strahlung kann zur Wärmegewinnung oder zur Gewinnung von elektrischem Strom genutzt werden. An eine Verwertung der von den Glaskörpern selbst absorbierten Wärmeenergie wurde nicht gedacht.

Die französische Patentanmeldung FR-A-2 539 851 offenbart ein Sonnenkraftwerk mit einem orientierbaren Heliostatenfeld, welches Licht auf in Abstand vom Heliostatenfeld angeordnete Lichtführungselemente reflektiert. Am Austritt der Lichtführungselemente sind Sonnenstrahlenempfänger vorgesehen, welche zu einem Turm angeordnet sind. Die Lichtführungselemente können die Gestalt eines Konus und einen Öffnungswinkel zwischen 5 und 45 Grad haben. Die Sonnenstrahlenempfänger können lageveränderlich relativ zu den Lichtführungselementen auf einem Wagen angeordnet sein und das aus den Lichtführungselementen austretende Lichte in elektrische Energie oder Wärmeenergie transformieren. Ein Charakteristikum des Solarkraftwerks ist, dass die aufgefangene Solarenergie an Ort und Stelle verwertet wird.

Die US 4,217,147 zeigt ein Sonnenkraftwerk mit wenigstens einem konkaven Spiegel und einem Energiekollektor. Der Spiegel des Sonnenkraftwerks ist ein stationärer sphärischer Spiegel. Des weiteren sind Mittel vorgesehen, um den Energiekollektor in den theoretischen Brennpunkt des Kugel zu bringen. Der Energiekollektor erstreckt sich in der optischen Achse in Richtung des Umfangs des Kugelspiegels. Der Energiekollektor besitzt übereinander angeordnete Photovoltaikzellen, um Gleichstrom zu erzeugen. Weiter sind Mittel vorgesehen, um die Photozellen zu kühlen.

### Aufgabe

Aufgabe der vorliegenden Erfindung ist es, ein Solarkraftwerk und ein Verfahren bereitzustellen, mit Hilfe derer kaltes Licht gewonnen und zur weiteren Verwendung in Maschinen oder Vorrichtungen zur Verfügung gestellt wird. Ein weiteres Ziel ist es, ein Solarkraftwerk bereitzustellen, mit welchem die längerwellige Strahlung, z.B. InfrarotStrahlung, vom kürzerwelligen Anteil separiert und der kürzerwellige Anteil konzentriert werden kann. Ein weiteres Ziel ist es, ein Kraftwerk, insbesondere ein Kugelspiegelkraftwerk, zur Energiegewinnung vorzuschlagen.

### Beschreibung

Erfindungsgemäss wird die obige Aufgabe bei einem Solarkraftwerk gemäss Oberbegriff von Anspruch 1 durch die Merkmale des kennzeichnenden Teils des Anspruchs 1 gelöst. Im Unterschied zu den eingangs beschriebenen Solarkraftwerken hat das erfindungsgemässe Kraftwerk das Ziel, insbesondere hochkonzentriertes, kaltes Licht zu gewinnen und für eine Verwertung zur Verfügung zu stellen. Dies wird gezielt durch Auffang- und Verdichtungselemente erreicht, welche die Wärmestrahlung zu absorbieren imstande sind.

Vorteilhaft schliesst die Mantelfläche des kegel- oder konusförmigen Verdichtungselements bezüglich der Körperlängsachse einen Winkel ε ein, welcher zwischen 0.5 und 5 Grad, vorzugsweise zwischen 1 und 4 Grad und ganz besonders bevorzugt zwischen 2 und 3 Grad liegt. Durch die Wahl dieser Geometrie kann sichergestellt werden, dass durch die Eintrittspupille zur Körperlängsachse im wesentlichen parallel einfallende Strahlung an den Wänden des Verdichtungselements total reflektiert und somit darin gefangen bleibt. Die Geometrie wird ausserdem so gewählt, dass die eingefangene Strahlung an der Austrittsöffnung mit einem Winkel austritt, welcher kleiner als der Grenzwinkel der Totalreflexion ist. Dabei spielt auch der Durchmesser der anschliessenden Faserleitung eine Rolle. Dies erlaubt es, das austretende Licht in einer Leitung, vorzugsweise in einer Quarzglasfaser an einen bestimmten Verwendungsort weiterzuleiten. Es ist zweckmässig, dass die Eintritts- und die Austrittsöffnungen Ebenen definieren, welche im wesentlichen orthogonal zur Körperlängsachse (= optische Achse) verlaufen.

Obwohl das Verdichtungselement grundsätzlich ein Hohlkörper mit innen verspiegelten Wänden sein könnte, ist das Auffang- und Verdichtungselement vorzugsweise ein Glaskörper, insbesondere ein Quarzglaskörper. In den Glaskörper eintretendes Licht wird an den Mantelflächen total reflektiert, wenn die entsprechenden Bedingungen für Totalreflexion erfüllt sind. Industrielles Quarzglas ist für längerwellige elektromagnetische Strahl jenseits des sichtbaren Spektralbereichs im wesentlichen undurchlässig, sodass das Auffang- und Verdichtungselement auch als Filterelement funktioniert. Alternativ ist denkbar, die Mantelinnenfläche eines konus- oder kegelförmigen Aufang- und Verdichtungselement mit einer bekannten Wärmestrahlung absorbierenden Beschichtung zu versehen, sodass die gewünschte Abtrennung der Wärmestrahlung erreicht ist.

Vorteilhaft schliesst an die Austrittsöffnung ein längliches zylindrisches Leiterelement, vorzugsweise eine Glasfaser, an. Austretendes Licht kann in einer Glasfaser, ebenfalls unter Totalreflexion an den Innenwänden, unter geringen Verlusten an den Verwendungsort weitertransportiert werden. Vorzugsweise ist das Verdichtungselement ein Kegel. Es kann aber auch als Prisma mit quadratischer, sechs-, achteckiger oder anderer polygoner Basisfläche ausgebildet sein.

Durch die Kombination eines Fokussierelements, z.B. Hohlspiegels, mit einem oder mehreren Verdichtungselementen können hohe Verdichtungen des aufgefangenen Lichtes erreicht werden.

Zweckmässigerweise ist das Verdichtungselement ein Glaskörper mit einem Brechungsindex deutlich grösser als Luft, vorzugsweise grösser als 1.3 und ganz besonders bevorzugt grösser als 1.4. Ein solcher Glaskörper besteht vorzugsweise aus Quarzglas. Quarzglas hat den Vorteil, dass es für kurzwellige Strahlung durchlässig ist, aber Wärmestrahlung absorbiert. Ein Quarzglaskörper mit der eingangs geforderten Geometrie reflektiert einfallendes Licht an den Innenwänden und kann dieses so stark verdichten.

Obwohl grundsätzlich auch ein oder mehrere Hohlspiegel, z.B. Parabolspiegel, im Solarkraftwerk einsetzbar sind, ist gemäss einer besonders bevorzugten Ausführungsform das Fokussierelement ein Kugelspiegel, und das Auffang- und Verdichtungselement ist in der Brennlinie resp. Brennlinienbereich des Kugelspiegels angeordnet. Ein Kugelspiegel hat den Vorteil, dass er keine optische Vorzugsachse hat (im Unterschied z.B. zu einem Parabolspiegel): Die optische Achse ist stets jener Kugelradius, in dessen Richtung gerade die Strahlung einfällt. Die Strahlung wird auf eine Brennlinie reflektiert, welche halbe Kugelradiuslänge hat und sich auf der aktuellen optischen Achse von der Kugeloberfläche aus erstreckt. Es sind eine Vielzahl von Verdichtungselementen vorgesehen, welche um die Brennlinie des Spiegels vorzugsweise symmetrisch angeordnet sind. Mit einer Vielzahl von als Lichtkelche ausgebildeten Verdichtungselementen kann ein Grossteil des vom Spiegel reflektierten Lichtes aufgefangen werden. Es versteht sich von selbst, dass der Spiegel selbst aus einer Mehrzahl von einzelnen Elementen hergestellt sein kann.

Zweckmässigerweise sind die Auffang- und Verdichtungselemente in einem Halterahmen angeordnet, und die Eintrittsöffnungen der Verdichtungselemente sind in Richtung des von den Kugelspiegelflächen reflektierten Lichtes gerichtet, damit möglichst viel des reflektierten Lichtes aufgefangen werden kann. Jeder Halterahmen kann je einen inneren und einen äusseren Ring aufweisen, welche mittels Stege zusammengehalten sind, und eine Vielzahl von Halterahmen sind übereinander zu einem Turm gestapelt. Dieser Turm wird im Weiteren auch "Receiver" genannt. Die Auffang- und Verdichtungselemente sind je nach Position in einem Winkel zur Receiverachse angeordnet. Die Anordnung der Lichtkelche in einem bestimmten Winkel zur Receiverachse erlaubt eine optimale Ausrichtung auf das fokussierte und reflektierte Licht.

Ist der Kugelspiegel stationär ausgeführt, so ist der Receiver-Turm im Kugelspiegel lageveränderlich angeordnet. Dies hat den Vorteil, dass der Receiver-Turm jeweils am Ort der höchsten Strahlungsdichte (=Brennlinie) anordenbar ist. Zweckmässigerweise sind Mittel vorgesehen, um den Receiver-Turm je nach Richtung des in den Kugelspiegel einfallenden Lichtes nachzuführen, sodass der Receiver-Turm im wesentlichen in der Brennlinie des Kugelspiegels angeordnet ist. Dies erlaubt es, ein Maximum der einfallenden Strahlung zu nutzen.

Gegenstand der vorliegenden Erfindung ist auch ein Verfahren zur Gewinnung von kaltem Licht aus Sonnenstrahlung mit den Merkmalen des Anspruchs 18.

Die Erfindung wird nachfolgend unter Bezugnahme auf die Figuren näher beschrieben. Es zeigt:
- Figur 1:: ein erstes Ausführungsbeispiel eines erfindungsgemässen Verdichtungselements, nachfolgend auch "Lichtkelch" genannt, in der Seitenansicht und im Massstab 1:1;
- Figur 2:: schematisch das Ausführungsbeispiel von Figur 1, ebenfalls in Seitenansicht;
- Figur 3:: eine perspektivische Ansicht eines Ausführungsbeispiels mit quadratischer Eintrittsöffnung;
- Figur 4:: in Stirnansicht eine runde Eintrittsöffnung;
- Figur 5:: ebenfalls in Stirnansicht eine achteckige Eintrittsöffnung;

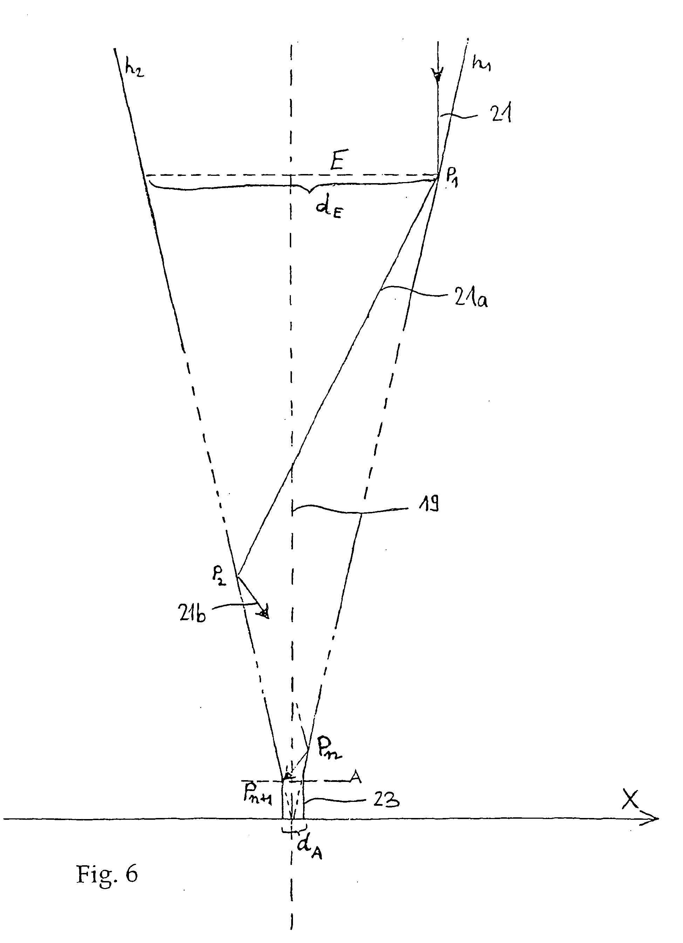

- Figur 6:: schematisch und in vergrössertem Massstab ein Lichtkelch mit beispielhaft eingezeichnetem Strahlengang;
- Figur 7:: die Totalreflexion von Lichtstrahlen an der Glas-Umgebung-Grenzfläche;
- Figur 8:: schematisch einen im Erdreich verlegten Kugelspiegel mit einem beweglichen Receiver.
- Figur 9: schematisch einen Turm mit Lichtkelchen und in verschiedenen Winkeln einfallende Lichtstrahlen;
- Figur 10:: ausschnittsweise ein im Zentrum des Turms angeordnetes Tragrohr;
- Figur 11: einen einzelnen Ring zur Aufnahme und Anordnung von Lichtkelchen in perspektivischer Ansicht;
- Figur 12:: den Ring von Figur 11 in Seitenansicht;
- Figur 13:: schematisch die Ausrichtung der Lichtkelche je nach Lage im Turm.

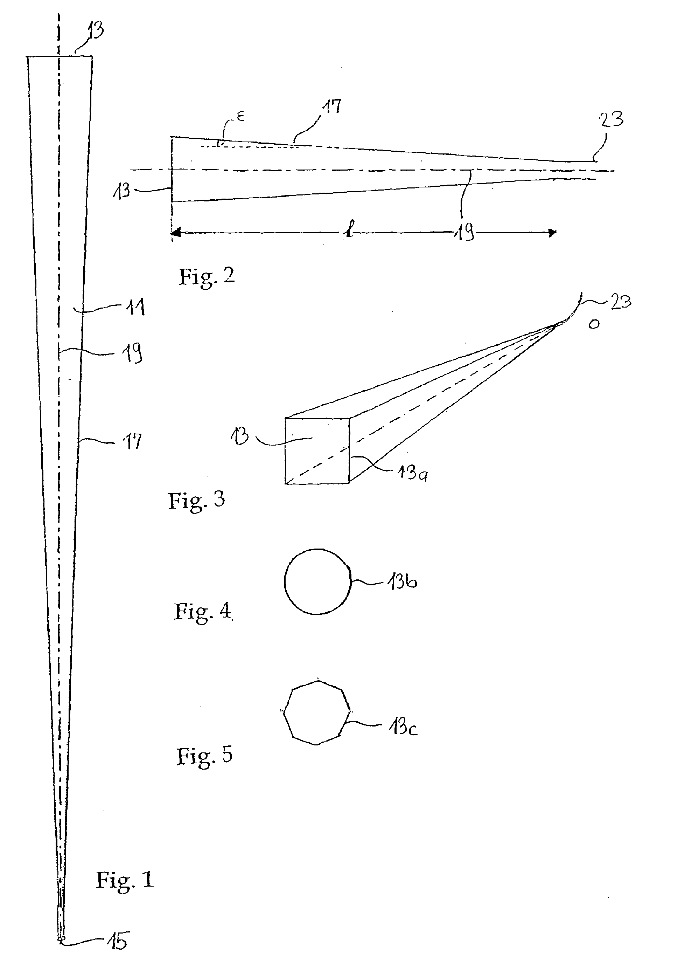

Die Figuren 1 bis 5 zeigen verschiedene mögliche Ausführungsformen eines Konzentrations- oder Verdichtungselementes 11 für elektromagnetische Strahlung, insbesondere für sichtbares Licht. Den verschiedenen Ausführungsformen des Verdichtungselements ist die konische resp. kegelförmige Geometrie gemeinsam, weshalb das Verdichtungselement 11 nachfolgend auch "Lichtkelch" genannt wird. Das Verdichtungselement 11 besitzt am dicken Ende eine Eintrittsöffnung (E) 13 für die zu verdichtende Strahlung und am gegenüberliegenden dünnen Ende eine Austrittsöffnung (A) 15 für die konzentrierte Strahlung. Die Mantelfläche 17 des Verdichtungselements 11 schliesst bezüglich der Körperlängsachse 19 (= optische Achse) einen Winkel ε ein, welcher zwischen 0.5 und 5 Grad, vorzugsweise zwischen 1 und 4 Grad und ganz besonders bevorzugt zwischen 2 und 3 Grad liegt (Fig. 2). Vorzugsweise ist das Verdichtungselement ein Glaskörper, insbesondere ein Quarzglaskörper. Der Quarzglaskörper kann mit geeigneten Metallen oder Stoffen dotiert sein, damit die Wärmestrahlung absorbiert wird. Die zur Achsrichtung des Verdichtungselementes durch die Eintrittsöffnung 13 einfallende Strahlung (Lichtstrahl 21) trifft beim Punkt P₁ auf die Mantelfläche 17 und wird an der Grenzfläche zwischen Glasoberfläche und Umgebungsluft total reflektiert (Lichtstrahl 21a). Der reflektierte Lichtstrahl 21a wird sodann auf die gegenüberliegende Mantelfläche gelenkt und beim Punkt P₂ wiederum total reflektiert (Lichtstrahl 21b). Bei jeder Totalreflexion nimmt der Einfallswinkel des Lichtstrahles 21 um 2ε, entsprechend dem Öffnungswinkel des Verdichtungselements, ab. Die Geometrie des Verdichtungselements ist so zu wählen, dass die aus Austrittsöffnung 15 austretenden Strahlen in einem Winkel austreten, welcher die Bedingung für Totalreflexion erfüllt. Dies erlaubt es, die austretende Strahlen in einem Lichtleiter (Glasfaser) 23 ebenfalls unter Totalreflexion nach bekannten glasfasertechnischen Prinzipien weiterzuleiten. Die erfindungsgemässen Lichtkelche erlauben das in den Kelch einfallende Licht um ein Vielfaches zu verdichten. Je nach Öffnungswinkel 2ε des Verdichtungselements 11 und Durchmesser des anschliessenden Lichtleiters, trifft der stets im wesentlichen axial einfallende Strahl 21 nach einer bestimmten Zahl von Totalreflexionen Pₙ, bei der Austrittsöffnung 15 aus dem Lichtkelch 11 aus (s. untenstehende Rechenbeispiele).

Geht man von einer Glasfaserleitung mit einem Durchmesser d_{A} von 1.4 mm und einem Öffnungswinkel des Lichtkelchs von 2ε = 4° aus, so ergeben sich für den Lichtkelch folgende Abmessungen: Durchmesser der Eintrittsöffnung d_{E} = 20 mm und Länge 1 des Lichtkelchs gleich 300 mm. Dies hat eine Konzentration des einfallenden Lichtes auf etwa das 200-fache zur Folge.

Die Eintrittsöffnung 13 verläuft im Allgemeinen orthogonal zur optischen Achse 19. Die genaue Querschnittsform der Eintrittsöffnung 13 ist wählbar. Diese kann z.B. einen quadratischen Querschnitt 13a (Fig. 3), einen runden Querschnitt 13b (Fig. 4) oder ein regelmässiges Sechs- oder Achteck 13c (Fig. 5) sein. Darüberhinaus ist eine Mikro-Facettierung denkbar, um die Lichtkelche besser kühlen zu können.

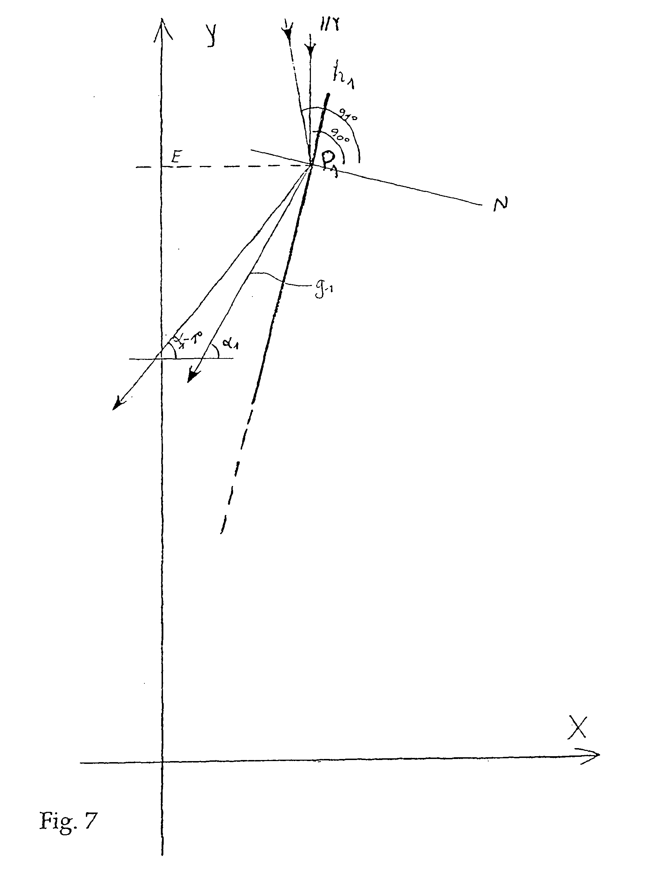

Realistischerweise kann man nicht von ganz exaktem axialem Strahlungseinfall ausgehen, da ja bereits reflektierte Strahlung auf den Lichtkelch trifft. Ungünstig wirkt sich ein leicht divergenter Strahlungsverlauf aus. Setzt man diesen (willkürlich) mit 2° Gesamtdivergenz an, so würde der Einfallswinkel bei P₁ nicht 90°, sondern 91° betragen, die Steigung der Geraden g₁ (reflektierter Lichtstrahl 21a) somit nicht den Winkel von 86°, sondern von 85° haben (Fig. 7). Die obigen Toleranzannahmen wurden auch bei den unten aufgeführten Tabellen gemacht.

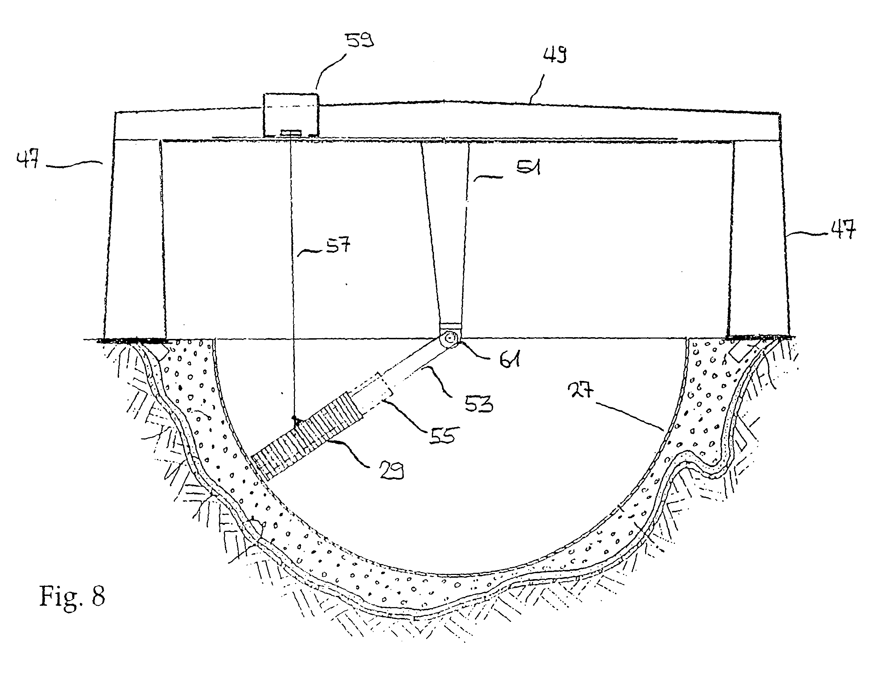

In Figur 8 ist schematisch ein Solarkraftwerk 25 mit stationärem Kugelspiegel gezeigt. Die Figur zeigt einen ins Erdreich (Sand/Kies) eingebauten Kugelspiegel 27 mit einem zum Lichteinfall nachführbaren Receiver 29. Es ist kein Massstab angegeben, weil der Kugelradius in weiten Grenzen variieren kann. Die präzise Auskleidung der Mulde kann beispielsweise nach einem im US-Patent 4,217,147 beschriebenen Verfahren erfolgen.

Es ist vorgesehen, die Kugelspiegel 27 direkt im Gelände, z.B. in einer Wüstengegend, auszubilden. Dabei kann die natürliche Beschaffenheit des Geländes genutzt werden, um das Solarkraftwerk mit geringen Mittel herstellen zu können. Aber auch künstliche Krater und Gerüstwände, sowie geeignet geformte Dachflächen können zu Herstellung des Reflektorspiegels Verwendung finden. Die Kugelspiegel können natürlich unterschiedlich dimensioniert sein, und es sind verschiedene Wege denkbar, die Kugelspiegelflächen auszubilden.

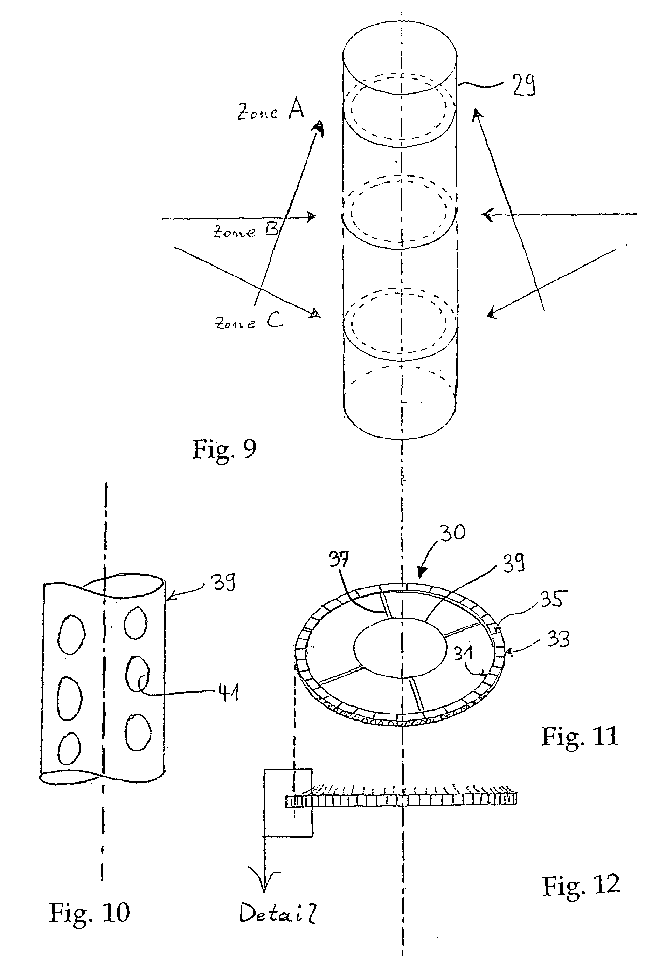

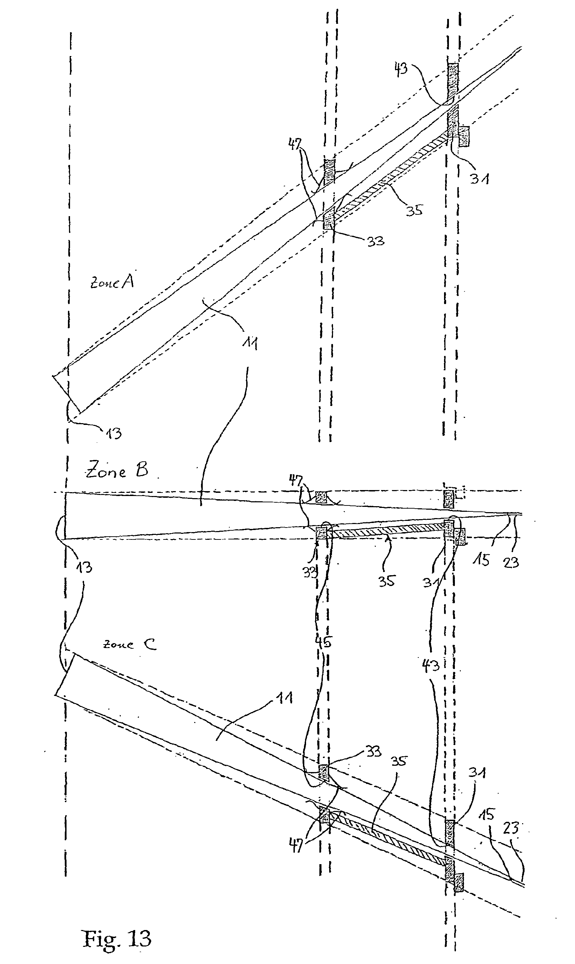

Das Solarkraftwerk 25 hat einen Hohlspiegel 27 und einen Empfänger oder "Receiver" 29, welcher aus einer Vielzahl von einzelnen Verdichtungselementen 11 gebildet ist. Der Receiver 29 entspricht einem Turm und ist in der Brennlinie des Hohlspiegels 27 angeordnet (Fig 9). Die Verdichtungselemente 11 sind im Receiverturm im Kreis mit den optischen Achsen 19 radial verlaufend angeordnet. Es versteht sich von selbst, dass die Eintrittsflächen 13 nach aussen und die Austrittsflächen 15 nach innen zum Zentrum hin orientiert sind. Die vom Hohlspiegel 27 reflektierte Strahlung trifft auf die Brennlinie in einem bestimmten Winkel zur (aktuellen) optischen Achse (zugleich Receiverachse). Der Receiver wird stets in der Brennlinie gehalten, d.h. dem Sonnenstand entsprechend nachgeführt, wenn der Spiegel stationär ist, wie im gezeigten Beispiel. Entsprechend ist der Receiver zusammen mit dem Spiegel nachzuführen, wenn der Spiegel nicht stationär ist. Damit die optischen Achsen 19 der Kelche 11 im wesentlichen koaxial zu den von den Hohlspiegelfläche reflektierten Strahlen verlaufen, sind die einzelnen Lagen von Verdichtungselementen 11 im Receiver 29 orthogonal zur Receiverachse (Zone B) oder in einem Winkel zu derselben (Zonen A und C) angeordnet (Fig. 9 und 13). Die Grösse dieses Winkels hängt von der Position des jeweiligen Verdichtungselementes innerhalb des Receivers ab.

Die Verdichtungselemente 11 sind jeweils in Halterahmen 30 aufgenommen, welche übereinander stapelbar sind. Ein Halterahmen 30 besitzt je einen inneren Ring 31 und einen äusseren Ring 33 (Fig. 11). Innere und äussere Ringe 31,33 sind durch Stege 35 zusammengehalten. Die beiden Ringe 31,33 können in der gleichen Ebene (entsprechend Zone B) oder versetzt zueinander (entsprechend Zonen A und C) angeordnet sein, damit die Verdichtungselemente - je nach Lage im Turm- einen vorgegebenen Winkel zur Receiverachse einnehmen. In den Ringen 31,33 sind Aussparungen 43,45 vorgesehen, in welche die Lichtkelche 11 steckbar sind. Die Aussparungen 43,45 sind in Abstand zueinander angeordnet derart, dass Zwischenräume zwischen den Lichtkelchen übrigbleiben. Dies ermöglicht, Pressluft durch die mit Lichtkelchen besetzten Ringe zu blasen und Wärmeenergie abzuführen. Die Ringe 31,33 sind des weiteren mittels Streben 37 an einem zentralen Tragrohr 39 befestigbar. Das Tragrohr hat bei einem Kugelspiegeldurchmesser von 50 m eine Länge von mindestens 12.5 m. In dem in Fig. 8 gezeigten Beispiel jedoch hat das Tragrohr im wesentlichen die Länge des Kugelradius. Im Tragrohr 39 sind Löcher 41 vorgesehen, durch welche die an die Austrittsöffnungen 15 der Lichtkelche 11 angeschlossenen Lichtleiter 23 sich erstrecken können. Die einzelnen Lichtleiter können sodann im Tragrohrinneren zu einem Bündel zusammengefasst und axial aus dem Tragrohr geführt sein.

Die Figur 13 zeigt die Anordnung der Verdichtungselemente 11 in den Halterahmen 30 näher im Detail. Es sind beispielhaft Verdichtungselemente der Zonen A,B und C gezeigt, die in einem Winkel zur Horizontalen (Zonen A und C) respektive in der Horizontalen angeordnet sind (Zone B). Es wird dem Fachmann klar sein, dass die winkelmässige Ausrichtung der Verdichtungselemente 11 von der Höhe des jeweiligen Halterahmens im Receiver-Turm abhängt, damit die Lichtkelche optimal auf die reflektierte Lichtstrahlung ausgerichtet sind. Die Lichtkelche 11 sind in Ausnehmungen 43 resp. 45 der Ringe 31 und 33 aufgenommen. Federelemente 47 klemmen die Lichtkelche 11 in den äusseren Ringen 33 fest, sodass diese nicht herausfallen können. Selbstverständlich können beliebig andere, dem Fachmann bekannte Befestigungsmittel zur Fixierung der Lichtkelche 11 verwendet werden.

Die Nachführung des Receivers 29 erfolgt im beschriebenen Beispiel vorzugsweise über ein Krangerüst, welches je nach Grösse der gesamten Anlage auszulegen ist (Fig. 8). In der Zeichnung ist ein festes Bauwerk mit Pfeilern 47 und Brücke 49 dargestellt. An der Brücke 49 ist, ebenfalls fest montiert und unbeweglich, ein Haltemast 51 vorgesehen, an dessen Ende, vorzugsweise exakt im Kugelmittelpunkt kardanisch das Montagerohr 53 befestigt ist. Das Montagerohr 53 trägt an seinem unteren Ende den Receiver-Turm 29, an welchen sich unmittelbar ein Reaktor 55 anschliessen kann. Am Receiver-Turm 29 sind schematisch die Ringe 31,33 mit den Lichtkelchen 11 angedeutet.

Das Montagerohr 53 wird bei der dargestellten Anlage von einem Stahlseil 57 gehalten und in Position gebracht. Dieses Stahlseil 57 wird, gemäss der üblichen Technologie von Kränen, an dem beweglichen Ausleger 59 geführt, welcher auf einer nicht näher gezeigten Schiene der Brücke 49 fahrbar ist.

Die Energie- bzw. Material-Leitungen sind nicht gezeigt. Sie verlaufen vorzugsweise in einem oder beiden Pfeilern 47 und über die Brücke 49 und den vertikalen Haltemasten 51, sowie die innen hohle Kardan-Anlage 61. Diese Leitungen können bis zur Kardan-Anlage 61 starr verlegt sein. Vom Kardan-Gelenk aus können die Leitungen im Innern des Halterohres 53 verlaufen. Die Leitungen werden daher nur bei der Kardan-Anlage 61 je nach Stellung des Rohres 53 beweglich abgewinkelt.

Obwohl die Lichtkelche grundsätzlich als verspiegelte Hohlkörper ausgebildet sein können, sind diese vorzugsweise Vollglaskörper aus Quarzglas. Der längerwellige Anteil der in die Lichtkelche 11 einfallenden Sonnenlichtstrahlung wird durch das Quarzglas wenigstens teilweise absorbiert, wodurch sich die Lichtkelche erwärmen. Es ist daher nötig, den Receiver zu kühlen. Dies kann beispielsweise durch Durchblasen von Pressluft geschehen. Es ist jedoch auch denkbar, ein Kühlmedium durch den Receiver zirkulieren zu lassen und die abgeführte Wärmeenergie mittels Wärmepumpen teilweise wieder zurückzugewinnen. Durch entsprechende Materialwahl, Geometrie der Lichtkelche und insbesondere des Durchmessers der Austrittspupille (Durchmesser der anschliessenden Leitung) können unterschiedliche Anteile des Lichtspektrums genutzt werden. Durch den Einsatz von Quarzglaskelchen wird der Infrarotanteil des aufgefangenen Lichtes absorbiert und ausgeschieden, sodass am Austritt der Lichtkelche hoch verdichtetes "Kaltlicht" zur Verfügung steht. Dieses hochenergetische Kaltlicht kann z.B. für die photolytische Spaltung von Wassermolekülen oder andere photochemische Prozesse eingesetzt werden. Eine weitere Anwendung bestünde beispielsweise in der Entkeimung von verschmutztem Trinkwasser, sowie zur Pumpung von Lasern.

Mit einem Kugelspiegel wird einfallendes Sonnenlicht bis ungefähr 50-fach verdichtet. Die erfindungsgemässen Lichtkelche ihrerseits können das Licht um einen Faktor 200 verdichten. Die durch ein erfindungsgemässes Solarkraftwerk erreichte Gesamtverdichtung des kurzwelligen Spektralanteils des Sonnenlichtes kann somit ca. 10'000 betragen.

Nachfolgend finden sich einige Berechnungen für Lichtkelche mit unterschiedlichen Öffnungswinkeln. Die in den Tabellen verwendeten Abkürzungen haben die folgende Bedeutung:
- Xₙ: in cm
- Yₙ: in cm
- αₙ: in Grad
- α_{nbogen}: Bogenmass
- mₙ=tanαₙ: Steigung gₙ/mₙ
- mₙ*Xₙ:
- cₙ=Yₙ-mₙ*Xₙ: Y-Achsenabschnitt von g_{n/}cₙ = Yₙ-mₙ*Xₙ
- m_{h1/2}-mₙ: der Nenner m_{h1/2}-mₙ
- Xₙ₊₁: X-Wert des Schnittpunktes von gₙ mit der jeweils gegenüberliegenden Mantellinie (in cm)
- Yₙ₊₁: Y-Wert zu Xₙ₊₁ (in cm)

Die Halbmesser der Eintrittspupille (X₁) sowie der jeweiligen Austrittspupille sind eingerahmt, ebenso der Einfallswinkel des Lichtstrahles auf die Wandung der Lichtleitung, bei der Austrittpupille.

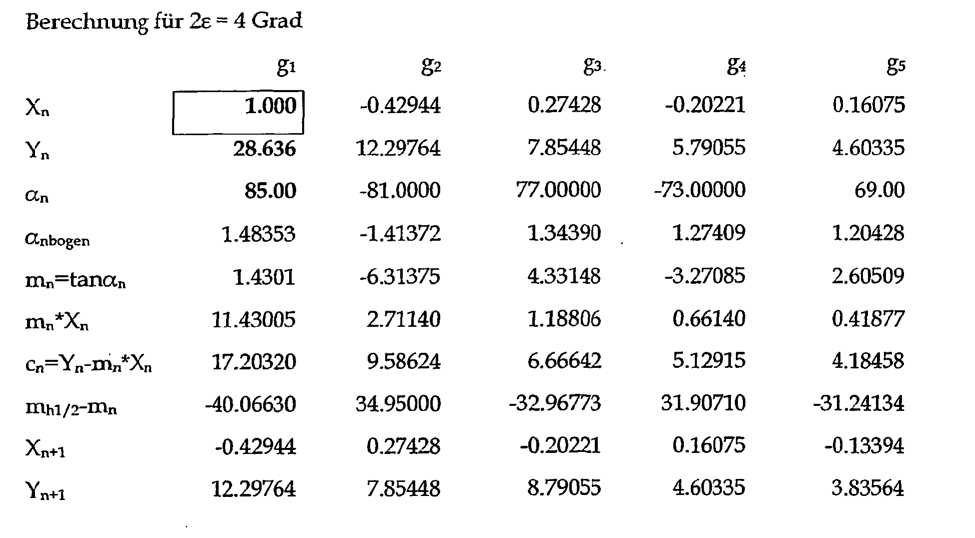

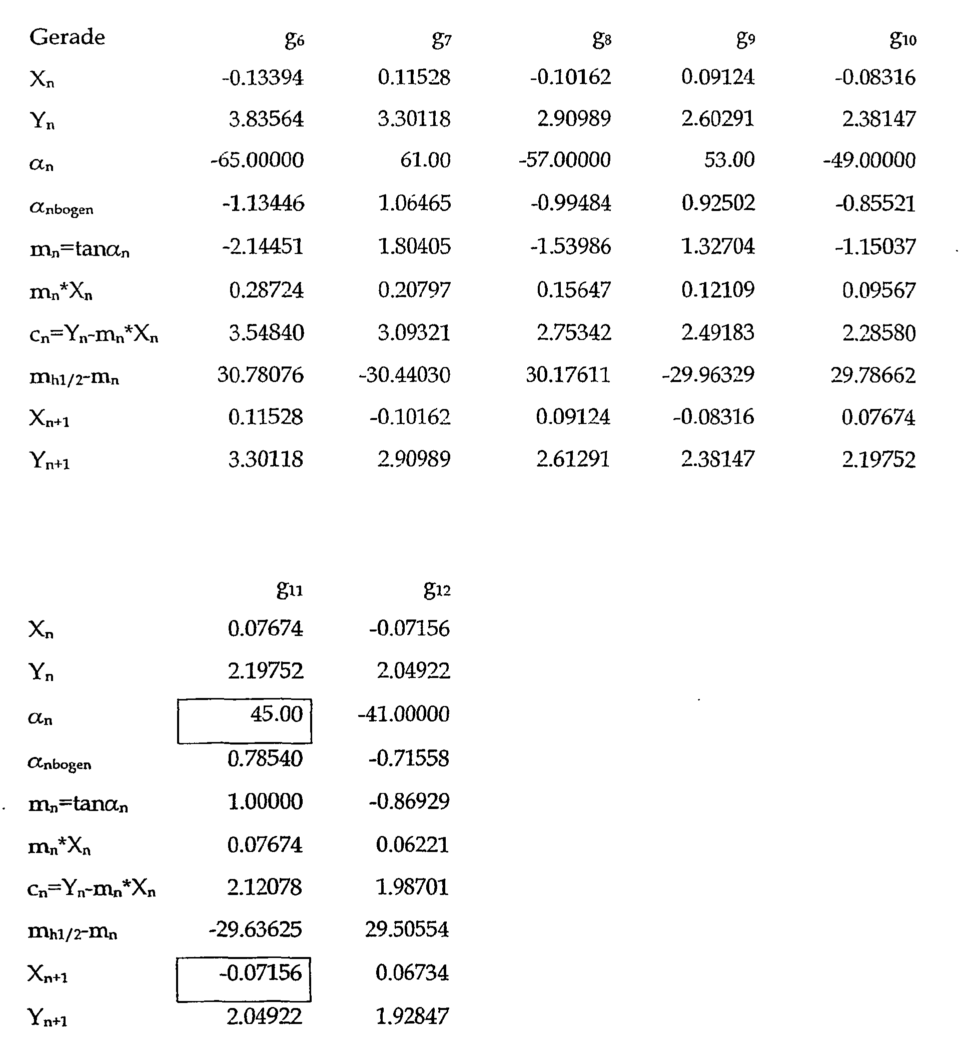

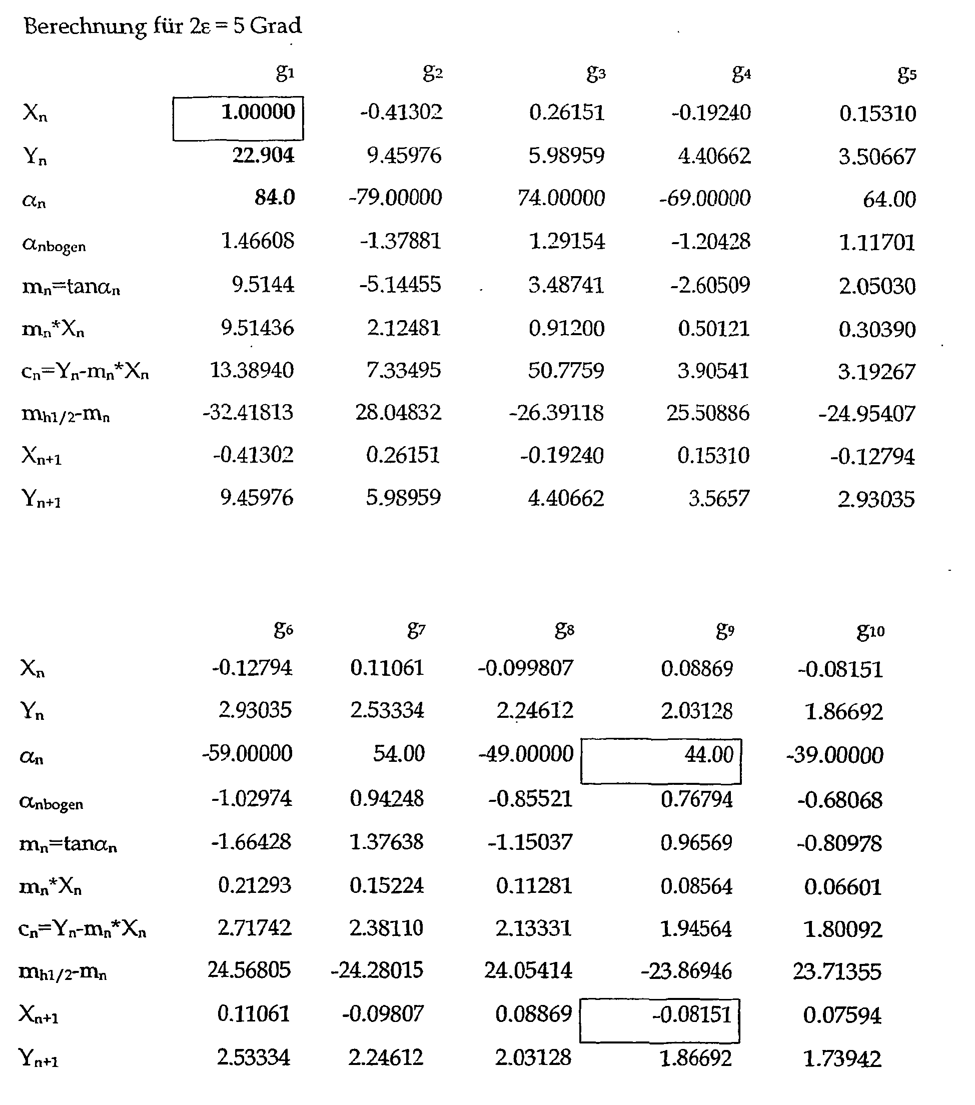

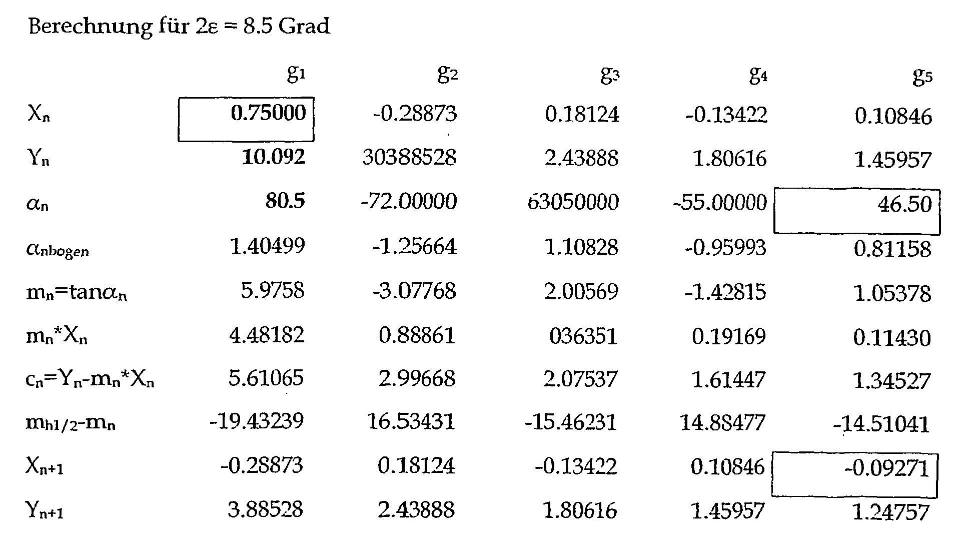

**Berechnung für 2ε = 15 Grad**

| | g₁ | g₂ | g₃ | g₄ | g₅ |
|---|---|---|---|---|---|
| Xₙ | 0.50000 | -0.18534 | 0.11872 | -0.09194 | 0.07943 |
| Yₙ | 3.798 | 1.40781 | 0.90177 | 0.069834 | 0.60334 |
| αₙ | 74.0 | -59.00000 | 44.00001 | -29.0000 | 14.00 |
| α_{nbogen} | 1.29154 | -1.02974 | 0.76794 | -0.50615 | 0.24435 |
| mₙ=tanαₙ | 3.4874 | -1.66428 | 0.96569 | -0.55431 | 0.24933 |
| mₙ*Xₙ | 1.74371 | 0.30846 | 0.11465 | 0.05096 | 0.01980 |
| cₙ=Yₙ-mₙ*Xₙ | 2.054417 | 1.09935 | 078712 | 0.64737 | 0.58354 |
| m_{h1/2}-mₙ | -11.08317 | 9.26003 | -8.56144 | 8.15006 | -7.84508 |
| Xₙ₊₁ | -0.18534 | 0.11872 | -0.09294 | 0.07943 | -0.07438 |
| Yₙ₊₁ | 1.40781 | 0.90177 | 0.69834 | 0.60334 | 0.56499 |

Die obigen Tabellen zeigen, dass je nach Öffnungswinkel des kegelförmigen Verdichtungselements ein Lichtstrahl nach bereits wenigen Reflexionen (grosser Öffnungswinkel) oder einer grösseren Anzahl von Totalreflexionen (kleiner Öffnungswinkel) bei der Austrittsöffnung 15 aus dem Lichtkelch 11 austritt.

### Zusammenstellung für verschiedene Abmessungen

Die nachfolgende Zusammenstellung enthält für verschieden ε-Werte die Durchmesser von Eintrittspupille (2X₁ = 2X_{E}) und jeweiliger Austrittspupille (2X_{A}), deren Verhältnis, sowie die Anzahl der Reflexionen (n) und die Länge (ℓ) des Lichtkelchs in cm.

| 2ε | 2X_{E}=2X₁ (cm) | 2X_{A} (mm) | X_{E}/X_{A} | n | ℓ(ca.-Werte in cm) |
|---|---|---|---|---|---|
| 4.0 | 2.00 | 1.44 | 14.0 | 11 | 30 |
| 5.0 | 2.0 | 1.63 | 12.3 | 9 | 22.9 |
| 8.5 | 1.5 | 1.85 | 8.09 | 5 | 10.1 |
| 15 | 1.0 | 1.8 | 5.4 | 3 | 3.8 |

Zusammenfassung: Ein Solarkraftwerk 25 besitzt mindestens ein Fokussierelement, z.B. Spiegel, zum Auffangen und Fokussieren von Sonnenstrahlung, und wenigstens ein im wesentlichen in oder um den Brennpunkt oder die Brennlinie des Fokussierelements angeordneten Auffang- und Verdichtungselement 11. Das Auffang- und Verdichtungselement 11 für elektromagnetische Strahlung besitzt einen kegel- oder konusförmigen Körper resp. eine solche Gestalt. Die Grundfläche des Körpers ist die Eintrittsöffnung 13 und dessen stumpfe Spitze die Austrittsöffnung 15 für die elektromagnetische Strahlung. Die Mantelfläche 17 des Verdichtungselements schliesst bezüglich der Körperlängsachse 19 vorzugsweise einen Winkel ε ein, welcher zwischen 0.5 und 5 Grad, vorzugsweise zwischen 1 und 4 Grad und ganz besonders bevorzugt zwischen 2 und 3 Grad liegt. Der Körper besteht vorzugsweise aus Quarzglas und absorbiert minestens den Grossteil der einfallenden Wärmestrahlung. Im Solarkraftwerk sind eine Vielzahl von Verdichtungselementen, mit ihrer Längsachse in die Richtung der einfallenden Strahlung ausgerichtet, angeordnet. Das in ein Verdichtungselement 11 einfallende Licht wird an der Mantelfläche 17 in den Körper zurück reflektiert, Wärmestrahlung wird absorbiert. Ein die Verdichtungselemente umgebendes Kühlmedium führt die Wärmemenge ab. Durch mehrmalige Reflexion an den Mantelflächen gelangt somit verdichtetes, im wesentlichen kaltes Licht zur der Eintrittsöffnung 13 gegenüberliegenden Austrittsöffnung 15. An die Austrittsöffnung 15 kann ein Lichtleiter, z.B. Quarzglasfaser, angeschlossen sein, in welcher das konzentrierte Licht ebenfalls unter Totalreflexion weitertransportiert wird.

### Legende:

- 11: konisches oder kegelförmiges Konzentrations- oder Verdichtungselement
- 13: Eintrittsöffnung
- 15: Austrittsöffnung
- 17: Mantelfläche
- 19: optische Achse
- 21: Lichtstrahl
- 23: Lichtleiter (Glasfaser)
- 25: Solarkraftwerk
- 27: Kugelspiegel
- 29: Empfänger oder "Receiver"
- 30: Halterahmen
- 31: innerer Ring
- 33: äusserer Ring
- 35: Steg
- 37: Streben
- 39: Tragrohr
- 41: Löcher im Tragrohr zum Durchführen der Lichtleiter
- 43: Ausnehmung im inneren Ring
- 45: Ausnehmung im äusseren Ring
- 47: Pfeiler
- 49: Brücke
- 51: Haltemast
- 53: Montagerohr
- 55: Reaktor
- 57: Stahlseil
- 59: Ausleger
- 61: Kardan-Anlage
- 63:

## Patentansprüche

1. Solarkraftwerk mit
- wenigstens einem Fokussierelement, z.B. Spiegel, zum Auffangen und Fokussieren von Sonnenstrahlung,
- wenigstens einem im wesentlichen in oder um den Brennpunkt oder die Brennlinie des Fokussierelements angeordneten Auffang- und Verdichtungselement (11) zum Auffangen der vom Fokussierelement fokussierten Sonnenstrahlung, mit
- einem kegel- oder konusförmigen Körper, dessen Grundfläche die Eintrittsöffnung (13) und dessen stumpfe Spitze die Austrittsöffnung (15) für die elektromagnetische Strahlung darstellt,
**dadurch gekennzeichnet,**
- **dass** entweder das Auffang- und Verdichtungselement (11) ein Quarzglaskörper ist, welcher für kaltes Licht durchlässig und für Wärmestrahlung im wesentlichen undurchlässig ist,
- oder das Auffang- und Verdichtungselement (11) ein verspiegelter Hohlkörper ist, dessen Mantelinnenfläche mit einer Wärmestrahlung absorbierenden Beschichtung versehen ist, um die Trennung von kaltem Licht und Wärmestrahlung zu erreichen,
- **dass** das Auffang- und Verdichtungselement (11) einen Öffnungswinkel aufweist, bei welchem auf der Mantelfläche auftretendes Licht total reflektiert wird,
- und **dass** an die Austrittsöffnung des Auffang- und Verdichtungselements (11) ein Lichtleiter (23) anschliesst zum Abtransport des aufgefangenen und konzentrierten Lichtes und zum Weiterleiten des Lichtes im Lichtleiter unter Totalreflexion an einen Verwendungsort.

2. Solarkraftwerk nach Anspruch 1, **dadurch gekennzeichnet, dass** die Mantelfläche des Auffang- und Verdichtungselements (11) bezüglich der Körperlängsachse (19) einen Winkel ε einschliesst, welcher zwischen 0.5 und 5 Grad, vorzugsweise zwischen 1 und 4 Grad und ganz besonders bevorzugt zwischen 2 und 3 Grad liegt.

3. Solarkraftwerk nach Anspruch 1 oder 2, **dadurch gekennzeichnet, dass** das Auffang- und Verdichtungselement (11) ein Quarzglaskörper ist.

4. Solarkraftwerk nach Anspruch 1 oder 2, **dadurch gekennzeichnet, dass** das Auffang- und Verdichtungselement (11) ein hohler Körper ist.

5. Solarkraftwerk nach einem der Ansprüche 1 bis 4, **dadurch gekennzeichnet, dass** die Eintritts- und die Austrittsöffnungen (13,15) des Auffang- und Verdichtungselements (11) Ebenen definieren, welche im wesentlichen orthogonal zur Körperlängsachse (19) verlaufen.

6. Solarkraftwerk nach einem der Ansprüche 1 bis 5, **dadurch gekennzeichnet, dass** an die Austrittsöffnung (15) ein längliches Leiterelement (23), vorzugsweise eine Quarzglasfaser, anschliesst.

7. Solarkraftwerk nach einem der Ansprüche 1 bis 6, **dadurch gekennzeichnet, dass** das Verdichtungselement (11) ein Kegel ist.

8. Solarkraftwerk nach einem der Ansprüche 1 bis 7, **dadurch gekennzeichnet, dass** das Verdichtungselement ein Prisma mit viereckiger oder polygoner Grundfläche ist.

9. Solarkraftwerk nach einem der Ansprüche 1 bis 7, **dadurch gekennzeichnet, dass** das Verdichtungselement (11) ein Glaskörper mit einem Brechungsindex deutlich grösser als Luft, vorzugsweise grösser als 1.3 und ganz besonders bevorzugt grösser als 1.4 ist.

10. Solarkraftwerk nach einem der Ansprüche 1 bis 9, **dadurch gekennzeichnet, dass** das Fokussierelement ein Kugelspiegel (27) ist und das Auffang und Konzentrationselement (11) im Brennlinienbereich des Kugelspiegels angeordnet ist.

11. Solarkraftwerk nach einem der Ansprüche 1 bis 10, **dadurch gekennzeichnet, dass** eine Vielzahl von Fokussier- und Verdichtungselementen (27,11) vorgesehen sind.

12. Solarkraftwerk nach einem der Ansprüche 1 bis 11, **dadurch gekennzeichnet, dass** die Auffang- und Verdichtungselemente (11) in einem Halterahmen (30) angeordnet sind und die Eintrittsöffnungen (13) in Richtung des von den Fokussierelementen (27) reflektierten Lichtes gerichtet sind.

13. Solarkraftwerk nach Anspruch 12, **dadurch gekennzeichnet, dass** der Halterahmen (30) je ein inneren und einen äusseren Ring (31,33) aufweist, welche mittels Stege (35) zusammengehalten sind, und dass eine Vielzahl von Halterahmen (30) übereinander zu einem Receiver-Turm gestapelt sind.

14. Solarkraftwerk nach Anspruch 13, **dadurch gekennzeichnet, dass** die Auffang- und Verdichtungselemente (11) je nach Lage im Receiver-Turm orthogonal zur Receiverlängsachse oder in einem bestimmten Winkel zu dieser angeordnet sind.

15. Solarkraftwerk nach Anspruch 13 oder 14, **dadurch gekennzeichnet, dass** der Receiver-Turm lageveränderlich angeordnet ist.

16. Solarkraftwerk nach einem der Ansprüche 13 bis 15, **dadurch gekennzeichnet, dass** Mittel vorgesehen sind, um den Receiver-Turm je nach Richtung des einfallenden Lichtes nachzuführen.

17. Solarkraftwerk nach einem der Ansprüche 1 bis 5, **dadurch gekennzeichnet, dass** Mittel vorgesehen sind, um die von den Auffang- und Verdichtungselemente (11) absorbierte Wärmeenergie abzuführen.

18. Verfahren zur Gewinnung von kaltem Licht aus Sonnenstrahlung bei welchem
- mit wenigstens einem Fokussierelement, z.B. einem Spiegel, Sonnenstrahlung aufgefangen, fokussiert und in die Basisfläche (13) eines kegel- oder konusförmigen Körpers, dessen Basisfläche die Eintrittsöffnung (13) und dessen stumpfe Spitze die Austrittsöffnung (15) für die elektromagnetische Strahlung darstellt, eingeleitet wird,
**dadurch gekennzeichnet,**
- **dass** die in die Basisfläche (13) eingeleitete Sonnenstrahlung
- entweder in einem kegel- oder konusförmiger Quarzglaskörper (11), welcher Quarzglaskörper (11) für kaltes Licht durchlässig und für Wärmestrahlung im wesentlichen undurchlässig ist,
- oder in einem kegel- oder konusförmigen, verspiegelten Hohlkörper, welcher Hohlkörper eine Mantelinnenfläche mit einer Wärmestrahlung absorbierenden Beschichtung hat, verdichtet wird,
wobei die gegenüberliegende Mantelflächen (17) des kegel- oder konusförmigen Quarzglaskörpers (11) bzw. Hohlkörpers einen derartigen Öffnungswinkel miteinander einschliessen, dass auf die Mantelfläche (17) auftretendes Licht total reflektiert wird,
- und **dass** mehrfach reflektiertes und verdichtetes Licht mittels eines an den Quarzglaskörper oder Hohlkörper anschliessenden (11) Lichtleiters (23) unter Totalreflexion im Lichtleiter an einen Verwendungsort weitergeleitet wird.

19. Verfahren nach Anspruch 18, **dadurch gekennzeichnet, dass** die gegenüberliegenden Mantelflächen (17) bezüglich der Körperlängsachse (19) des kegel- oder konusförmigen Körpers (11) einen Winkel ε einschliessen, welcher zwischen 0.5 und 5 Grad, vorzugsweise zwischen1 und 4 Grad und ganz besonders bevorzugt zwischen 2 und 3 Grad liegt.

## Claims

1. A solar power plant with
- at least one focussing element, a reflector for example, for capturing and focussing solar radiation.
- at least one capturing and concentrating element arranged essentially at or around the focal point or focal line of the focussing element for capturing the insolation focussed by the focussing element, with
- a tapering or cone-shaped body, whose base area constitutes the entry opening (13) and whose truncated tip constitutes the exit opening for the electromagnetic radiation,
**characterized in that**
- the capturing and concentrating element (11) is one of a quartz glass body which is permeable for cold light and essentially impermeable for thermal radiation and
- a hollow body whose internal walls are coated with a coating absorbing the thermal radiation in order to achieve a separation of cold light and thermal radiation,
- that the capturing and concentrating element (11) has angle of aperture, at which light striking the internal walls is totally reflected, and that
- an optical waveguide (23) is connected to the exit opening of the capturing and concentrating element (11) to remove the captured and concentrated light and transport it to a place of utilization.

2. A solar power plant in accordance with Claim 1, **characterized in that** the lateral surface of the capturing and concentrating element (11) forms an angle ε with respect to the longitudinal axis (19) of the body that amounts to between 0.5 and 5 degrees, preferably between 1 and 4 degrees and even more preferably between 2 and 3 degrees.

3. A solar power plant in accordance with Claim 1 or Claim 2, **characterized in that** the capturing and concentrating element (11) is a quartz glass body.

4. A solar power plant in accordance with Claim 1 or Claim 2, **characterized in that** the capturing and concentrating element (11) is a hollow body.

5. A solar power plant in accordance with any one of Claims 1 to 4, **characterized in that** the entry and exit openings (13, 15) of the capturing and concentrating element (11) define planes that extend essentially at right angles to the longitudinal axis (19) of the body.

6. A solar power plant in accordance with any one of Claims 1 to 5, **characterized in that** an oblong optical waveguide (23), preferably a quartz glass fiber, is connected to the exit opening (15).

7. A solar power plant in accordance with any one of Claims 1 to 6, **characterized in that** the concentrating element is a cone.

8. A solar power plant in accordance with any one of Claims 1 to 7, **characterized in that** the concentrating element is a prism with a square or a polygonal base area..

9. A solar power plant in accordance with any one of Claims 1 to 7, **characterized in that** the concentrating element (11) is a glass body with an index of refraction clear greater than air, preferably greater than 1,3 and even more preferably greater than 1.4.

10. A solar power plant in accordance with any one of Claims 1 to 9, **characterized in that** the focussing element is a spherical reflector (27) and that the capturing and concentrating element (11) is arranged in the region of the focal line of the spherical reflector.

11. A solar power plant in accordance with any one of Claims 1 to 10, **characterized in that** it is provided with a multiplicity of focussing and concentrating elements (27, 11).

12. A solar power plant in accordance with any one of Claims 1 to 11, **characterized in that** the capturing and concentrating elements (11) are arranged in a supporting frame (30) and that the entry openings (13) are oriented in the direction of the light reflected by the focussing elements (27).

13. A solar power plant in accordance with Claim 12, **characterized in that** the supporting frame (30) comprises one inner and one outer ring (31, 33) that are joined together by means of webs (35) and that a multiplicity of supporting frames (30) are stacked on top of each other to constitute a receiver tower.

14. A solar power plant in accordance with Claim 13, **characterized in that** the capturing and concentrating elements (11), depending on their position in the receiver tower, are arranged either orthogonally with respect to the longitudinal axis of the receiver or at a certain angle thereto.

15. A solar power plant in accordance with Claim 13 or Claim 14, **characterized in that** the receiver-tower is arranged in such a way that its position can be changed.

16. A solar power plant in accordance with any one of Claims 13 to 15, **characterized in that** means are provided for making the receiver tower follow the sun according to the direction of the incident light

17. A solar power plant in accordance with any one of Claims 1 to 5, **characterized in that** means are provided for removing the thermal energy absorbed by the capturing and concentrating elements (11).

18. A method of producing cold light from solar radiation by capturing, focussing and passing the solar radiation through the base area (13) of a tapering or cone-shaped body whose base area (13) constitutes the entry opening (13) and whose truncated tip constitutes the exit opening for the electromagnetic radiation
**characterized in**
- **that** the solar radiation being introduced into the base area is concentrated
- either in a cone shaped quartz glass body which quartz glass body is permeable for cold light and essentially impermeable for thermal radiation or
- in a hollow mirrorized body which hollow body has internal walls with a coating absorbing the thermal radiation;
- whereas the opposite lateral surfaces (17) of the coneshaped quartz glass body (11) and the hollow body, respectively, constitute with each other an angle of aperture such that light striking the lateral surface (17) will always be totally reflected and
- **that** repeatedly reflected an concentrated light is made to enter an oblong optical wave guide (23) at the exit opening (15) and to be transported in conditions of total reflection to a place of utilization.

19. A method in accordance with Claim 20, **characterized in that** the opposite lateral surfaces (17) form an angle ε with respect to the longitudinal axis (19) of the body that amounts to between 0.5 and 5 degrees, preferably between 1 and 4 degrees and even more preferably between 2 and 3 degrees.

## Revendications

1. Centrale solaire avec
- au moins un élément de focalisation, par exemple un miroir, pour capter et focaliser le rayonnement solaire,
- au moins un élément de captation et de concentration (11) placé substantiellement dans ou autour du foyer ou de l'axe focal pour capter le rayonnement solaire focalisé par l'élément de focalisation avec
- un corps en forme de quille ou de cône dont la surface de base constitue l'ouverture d'entrée (13) et dont la pointe tronquée constitue l'ouverture de sortie (15) pour le rayonnement électromagnétique,
**caractérisée en ce**
- **que** soit l'élément de captation et de concentration (11) est un corps en verre de quartz qui est perméable à la lumière froide et substantiellement imperméable au rayonnement thermique,
- soit l'élément de captation et de concentration (11) est un corps creux métallisé dont la surface intérieure de l'enveloppe est pourvue d'une enduction qui absorbe le rayonnement thermique pour obtenir la séparation de la lumière froide et du rayonnement thermique,
- **que** l'élément de captation et de concentration (11) présente un angle d'ouverture pour lequel la lumière qui tombe sur l'enveloppe est totalement réfléchie
- et **qu'**un guide de lumière (23) se rattache à l'ouverture de sortie de l'élément de captation et de concentration (11) pour l'évacuation de la lumière captée et concentrée et pour la transmission de la lumière dans le guide de lumière en réflexion totale à un lieu d'utilisation.

2. Centrale solaire selon la revendication 1, **caractérisée en ce que** la surface d'enveloppe de l'élément de captation et de concentration (11) inclut par rapport à l'axe longitudinal du corps (19) un angle ε qui se situe entre 0,5 et 5 degrés, de préférence entre 1 et 4 degrés et de manière tout particulièrement préférée entre 2 et 3 degrés.

3. Centrale solaire selon la revendication 1 ou 2, **caractérisée en ce que** l'élément de captation et de concentration (11) est un corps en verre de quartz.

4. Centrale solaire selon la revendication 1 ou 2, **caractérisée en ce que** l'élément de captation et de concentration (11) est un corps creux.

5. Centrale solaire selon l'une quelconque des revendications 1 à 4, **caractérisée en ce que** les ouvertures d'entrée et de sortie (13, 15) de l'élément de captation et de concentration (11) définissent des plans qui sont substantiellement orthogonaux par rapport à l'axe longitudinal du corps (19).

6. Centrale solaire selon l'une quelconque des revendications 1 à 5, **caractérisée en ce qu'**un élément guide allongé (23), de préférence une fibre de verre de quartz, se rattache à l'ouverture de sortie (15).

7. Centrale solaire selon l'une des revendications 1 à 6, **caractérisée en ce que** l'élément de concentration (11) est un cône.

8. Centrale solaire selon l'une des revendications 1 à 7, **caractérisée en ce que** l'élément de concentration est un prisme avec une surface de base carrée ou polygonale.

9. Centrale solaire selon l'une des revendications 1 à 7, **caractérisée en ce que** l'élément de concentration (11) est un corps en verre avec un indice de réfraction considérablement supérieur à l'air, de préférence supérieur à 1,3 et de manière tout particulièrement préférée supérieur à 1,4.

10. Centrale solaire selon l'une des revendications 1 à 9, **caractérisée en ce que** l'élément de focalisation est un miroir sphérique (27) et l'élément de captation et de concentration (11) est placé dans la zone de l'axe focal du miroir sphérique.

11. Centrale solaire selon l'une des revendications 1 à 10, **caractérisée en ce qu'**une multitude d'éléments de focalisation et de concentration (27, 11) est prévue.

12. Centrale solaire selon l'une des revendications 1 à 11, **caractérisée en ce que** les éléments de captation et de concentration (11) sont placés dans un cadre de support (30) et que les ouvertures d'entrée (13) sont placées en direction de la lumière réfléchie par les éléments de focalisation (27).

13. Centrale solaire selon la revendication 12, **caractérisée en ce que** le cadre de support (30) présente respectivement un anneau intérieur et un anneau extérieur (31, 33) qui sont maintenus ensemble par des baguettes (35) et qu'une multitude de cadres de support (30) sont empilés l'un au-dessus de l'autre en une tour récepteur.

14. Centrale solaire selon la revendication 13, **caractérisée en ce que** les éléments de captation et de concentration (11) sont placés, selon la position dans la tour récepteur, orthogonaux par rapport à l'axe longitudinal du récepteur ou dans un certain angle par rapport à celui-ci.

15. Centrale solaire selon la revendication 13 ou 14, **caractérisée en ce que** la tour récepteur est placée variable en position.

16. Centrale solaire selon l'une des revendications 13 à 15, **caractérisée en ce que** des moyens sont prévus pour guider la tour récepteur selon la direction de la lumière incidente.

17. Centrale solaire selon l'une des revendications 1 à 5, **caractérisée en ce que** des moyens sont prévus pour évacuer l'énergie thermique absorbée par les éléments de captation et de concentration (11).

18. Procédé pour obtenir de la lumière froide à partir de rayonnement solaire pour lequel
- le rayonnement solaire est capté avec au moins un élément de focalisation, par exemple un miroir, est focalisé et introduit dans la surface de base (13) d'un corps en forme de quille ou de cône dont la surface de base constitue l'ouverture d'entrée (13) et dont la pointe tronquée constitue l'ouverture de sortie (15) pour le rayonnement électromagnétique,
**caractérisé en ce**
- **que** le rayonnement solaire introduit dans la surface de base (13) est concentré
- soit dans un corps en verre de quartz en forme de quille ou de cône (11), lequel corps en verre de quartz est substantiellement perméable à la lumière froide et imperméable au rayonnement thermique,
- soit dans un corps creux métallisé en forme de quille ou de cône, lequel corps creux a une surface intérieure d'enveloppe avec une enduction absorbant le rayonnement thermique,
- les surfaces d'enveloppe opposées (17) du corps en verre de quartz en forme de quille ou de cône (11) ou du corps creux incluent l'une avec l'autre un angle d'ouverture tel que la lumière incidente sur la surface d'enveloppe (17) est réfléchie totalement
- et **que** la lumière réfléchie et concentrée plusieurs fois est transmise au moyen d'un guide de lumière (23) rattaché au corps en verre de quartz ou au corps creux en réflexion totale dans le guide de lumière à un lieu d'utilisation.

19. Procédé selon la revendication 18, **caractérisé en ce que** les surfaces d'enveloppe opposées (17) incluent par rapport à l'axe longitudinal (19) du corps en forme de quille ou de cône (11) un angle ε qui se situe entre 0,5 et 5 degrés, de préférence entre 1 et 4 degrés et de manière tout particulièrement préférée entre 2 et 3 degrés.
